# EUROPÄISCHE PATENTSCHRIFT

(11) **EP 1 005 795 B1**
(45) Veröffentlichungstag und Bekanntmachung des Hinweises auf die Patenterteilung: **03.03.2004**
(21) Anmeldenummer: 98122956.0
(22) Anmeldetag: 03.12.1998
(51) Int. Cl.: A23L 1/08, A23L 2/84

(54) **Verfahren zur Herstellung von Frucht- und Gemüsesaftkonzentraten**
Process of manufacturing fruit or vegetable juice concentrates
Procédé de fabrication de concentrés de jus de fruit ou de legumes

(43) Veröffentlichungstag der Anmeldung: 07.06.2000
(73) Patentinhaber: Sensient Food Colors Germany GmbH & Co. KG, 21502 Geesthacht (DE)
(72) Erfinder: Klingenberg, Andreas Dr. rer. nat., 21465 Reinbek (DE); Marx, Jana Dipl.-Ing. (FH), 21481 Lauenberg (DE)
(74) Vertreter: Richter, Werdermann, Gerbaulet & Hofmann

(56) Entgegenhaltungen:
- WO-A-91/06226
- WO-A-98/24331
- DE-A- 3 229 345
- US-A- 4 008 339
- US-A- 4 177 295
- GöKMEN V. ET AL: 'Improved Ultrafiltration for Color Reduction and Stabilization of Apple Juice' JOURNAL OF FOOD SCIENCE Bd. 63, Nr. 3, 1998, Seiten 504 - 507

## Beschreibung

Die Erfindung betrifft ein Verfahren zur Herstellung von Frucht- und Gemüsekonzentraten gemäß dem Oberbegriff des Anspruches 1.

Frucht- und Gemüsesäfte bzw. deren Konzentrate enthalten eine Vielzahl der unterschiedlichsten Inhaltsstoffe, die überwiegend positiv auf die Gesundheit einwirken. Von besonderem Interesse sind dabei die Polyphenole, zu denen die Anthocyanide und die Flavonoide zählen und denen u. a. antioxidative Wirkungen zugeschrieben werden. Andererseits sind in Frucht- und Gemüsesäften oftmals sehr hohe Konzentrationen an Zukkern und Säuren enthalten, die sich auf die Gesundheit negativ auswirken können, wie z. B. bei Karies, Diabetes u. dgl..

Die DE-A-32 29 345 beschreibt die Herstellung eines Rote-Bete-Saftkonzentrates mit einer verbesserten Zusammensetzung der Inhaltsstoffe, nämlich eine Aufkonzentrierung der Farbstoffe (Betalaine) von Rote-Bete-Saft bei gleichzeitiger Reduzierung des Zucker-, Nitrat- und Geruchsstoffgehaltes, um ein Produkt mit u. a. erhöhter Haltbarkeit zu erhalten. Der zur Ultrafiltration vorgesehene Saft wird durch Auspressen oder durch Extraktion der blanchierten und zerkleinerten Knollen erhalten. Zur Viskositätserniedrigung des Saftes ist eine Behandlung des zerkleinerten Materials mit Pektinasen vorgesehen. Als Enzymbehandlung ist eine Behandlung mit den Pektinasen für eine Stunde bei 30° C vorgesehen. Anschließend wird der Saft zur Denaturierung farbstoffabbauenden Enzyme 3 Minuten bei 65° C pasteurisiert oder kurz erhitzt. Danach wird vom Ungelösten abfiltriert und eine Ultrafiltration durchgeführt. Der Rote-Bete-Saft wird dabei an handelsüblichen Ultrafiltrationsmodulen mit Membranen mit nominellen Trenngrenzen zwischen Mol-Gewicht 1000 und 6000 und Temperaturen zwischen 1° und 25° C bei Drücken zwischen 1 und 20 bar, vorzugsweise zwischen 4 und 10 bar ultrafiltriert. Dieses Verfahren führt nicht zu einer Erhöhung der Konzentration von Flavonoiden und/oder Anthocyaniden bei gleichzeitiger Reduzierung von Zuckern und Säuren.

Die WO 91 06 226 A beschreibt ein Verfahren zur Herstellung eines Obst- oder Gemüsesaftkonzentrates, wobei das behandelte, dearomatisierte Produkt aus der Zentrifugierung mit einem gewöhnlichen Filter filtriert wird, wonach das Filtrat konzentriert wird. In Verbindung mit diesem Verfahren soll ein gewöhnlicher Filter verwendet werden, der erheblich billiger ist, als die bisher verwendete Ultrafiltrationsausrüstung. Dieses Verfahren arbeitet nicht mit der Ultrafiltration.

Die Literaturstelle GÖKMEN. V. ET AL.: "Improved Ultrafiltration for Color Reduction and Stabilization of Apple Juice', JOURNAL OF FOOD SCI-ENCE, 1998, Band 63, Nr. 3, Seiten 504-507 befasst sich mit der verbesserten Ultrafiltration zur Farbverringerung und Stabilisierung von Apfelsaft. Ziel dieser Verbesserung ist es, Polyphenole, die für die Eintrübung und Bräunung während der Lagerung von klarem Apfelsaft und Konzentraten verantwortlich sind, selektiv durch ein Ultrafiltrationsverfahren zu entfernen, bei dem Membranen aus Polyethersulfon und Polyvinylpyrolidon verwendet werden. Die dabei enthaltenen Ergebnisse wurden mit denen verglichen, die mit handelsüblichen Ultrafiltrationsmembranen aus regneriertem Zelluloseazetat erzielt worden sind. Auch wurden dabei die Auswirkungen einer Laccasebehandlung auf die Entfernung von Polyphenolen und Färbung bei Apfelsaft untersucht. Es hat sich dabei gezeigt, dass individuell gefertigte Membranen wirkungsvoll waren bei der Verringerung der Menge an Polyphenolen. Eine bemerkenswerte erwünschte Färbungsentfernung von Apfelsaft konnte ebenfalls bei der Verwendung dieser Membran erreicht werden. Die erhaltenen Produkte waren in Färbung und Klarheit bei 50° C bis zu sechs Wochen stabil.

Es ist daher Aufgabe der Erfindung, ein Verfahren zu schaffen, das es ermöglicht, Frucht- und Gemüsekonzentrate mit einer Anreicherung von Flavonoiden und/oder Anthocyaniden herzustellen, die gegenüber naturbelassenen Frucht- und Gemüsesäften bzw. Konzentraten eine verbesserte Zusammensetzung der Inhaltsstoffe, d. h. eine Erhöhung der Konzentration von Polyphenolen bei gleichzeitiger Reduzierung von Zuckern und Säuren, besitzen.

Diese Aufgabe wird durch die Merkmale des Anspruchs 1 gelöst.

Dazu wird ein erfindungsgemäßes Verfahren bereitgestellt, das eine Anreicherung von hochmolekularen Inhaltsstoffen mit einem MG > 500 bzw. der polyphenolischen Inhaltsstoffe, einschließlich der Anthocyanfarbstoffe, bei gleichzeitiger Verminderung der niedermolekularen Inhaltsstoffe mit einem MG < 200 bzw. des Gesamtzuckergehaltes und der Säuren bei Frucht- und Gemüsesäften mittels Ultrafiltration erlaubt.

Das erfindungsgemäße Verfahren besteht hiernach darin, dass zur Herstellung eines Vorproduktes ein flavonoid- und/oder anthocyanidhaltiger Frucht- und Gemüsesaft oder ein entsprechendes Konzentrat, das mit Wasser im Verhältnis 1:2 bis 1:9 verdünnt wird, mit einer Mischung aus Pektinasen und Cellulasen, Hemicellulasen und/oder Proteasen enzymatisch über einen Zeitraum von einer Stunde und bei 40° bis 55° C behandelt wird, wobei die entstehenden Trubstoffe nach Sedimentation abfiltriert werden, und dass das erhaltene Vorprodukt zur Erlangung des Frucht- oder Gemüsesaftkonzentrates mindestens einer Ultrafiltration unterzogen wird, wobei die Trenngrenze des Filters zwischen 2.000 und 20.000 Dalton liegt.

Zur Durchführung des Verfahrens wird der entsprechende Frucht- oder Gemüsesaft- bzw. ein entsprechendes Konzentrat zur Herstellung eines Vorproduktes mit Wasser verdünnt. Um die Viskosität des verdünnten Konzentrates zu verringern, wird eine enzymatische Behandlung durchgeführt. Dazu werden flüssige, hoch konzentrierte pektolytische Präparate verwendet, die vorzugsweise Pektinasen und Cellulasen, Hemicellulasen und/oder Proteasen aufweisen, wobei die Pektinasen die Hauptaktivität darstellen und die anderen Enzyme nützliche Nebenaktivitäten. Derartige pektolytische Präparate sind kommerziell für die Fruchtsaftverarbeitung erhältlich. Die enzymatische Behandlung wird unter Erwärmung durchgeführt. Nach Abschluß der Behandlung wird das verdünnte Konzentrat auf Raumtemperatur abgekühlt, und anschließend läßt man die Trubstoffe sedimentieren. Die Trubstoffe werden mittels einer konventionellen Filtration, z. B. Beutel-, Kerzen- oder Nanofiltration, abgetrennt. Das filtrierte Vorprodukt wird im Anschluß pasteurisiert. Danach wird mit dem Vorprodukt erfindungsgemäß eine Ultrafiltration durchgeführt, durch die die Polyphenole im Retentat angereichert werden, während die Zucker und Säuren mittels des Permeats abgetrennt werden.

Bei der Ultrafiltration handelt es sich um ein druckbetriebenes Membranverfahren, bei dem die Überströmgeschwindigkeit möglichst hoch angesetzt werden sollte. Dazu werden erfindungsgemäß asymmetrische polymere Ultrafiltrationsmembranen verwendet. Geeignet sind beispielsweise Polysulfonmembranen, Polyethersulfonmembranen und deren hydrophile Varianten, Polyaramidmembranen und deren hydrophile Varianten. Bei den erfindungsgemäß verwendeten Membranen werden die höher molekularen Polyphenole zurückgehalten und die niedriger molekularen Verbindungen, wie Zucker und Säuren können die Membran passieren.

Um die Polyphenole während des Prozesses nicht oxidativ zu belasten, erfolgt die Ultrafiltration bei einer Temperatur wenig über der Raumtemperatur. Bei Erreichen der gewünschten Polyphenolkonzentration im Retentat wird die Ultrafiltration beendet, wobei das Retentat das erfindungsgemäße Endprodukt darstellt.

Das erfindungsgemäße Verfahren wird nach einer bevorzugten Ausführungsform wie folgt durchgeführt:
1. Herstellung des Vorproduktes aus Frucht- oder Gemüsesaftkonzentraten, z. B. mit 30 - 40 % Wassergehalt.
   - Verdünnung des Konzentrates mit Wasser im Verhältnis 1:2-1:9, vorzugsweise im Verhältnis 1:4.
   - Herstellen von wäßrigen Enzymlösungen aus handelsüblichen Enzympräparaten, die Pektinasen und Cellulasen, Hemicellulasen und/oder Proteasen enthalten.
   - Enzymbehandlung des verdünnten Konzentrates mit der Enzymlösung über eine Stunde bei 40° - 55°C, wobei die Enzymkonzentration das doppelte bis dreifache der empfohlenen Herstellerdosage beträgt.
   - Abkühlen des Produktes auf 20°C.
   - Trübstoffsedimendation über eine Zeitraum von 10 bis 20 h.
   - Trubstoffabtrennung durch Filtration mit einem herkömmlichen Filter, dessen Trenngrenze bei 0,2 - 3 µ liegt.
   - Pasteurisieren des Vorproduktes mit einer Haltezeit zwischen 15 - 60 sec bei 97°C.
2. Ultrafiltration des Vorproduktes zur Anreicherung der Polyphenole und Verminderung der Zucker und Säuren unter Verwendung einer asymmetrischen Ultrafiltrationsmembran, wobei geeignete Membranen einen Wasserfluß (Rührzelle, 3 bar, 20°C) von 20 - 300 l/m²h aufweisen, und wobei ein Rückhalt (Rührzelle, 3 bar, 20°C) für die Testsubstanz PVP K30 von mindestens 94% gegeben ist. Für die Ultrafiltration im Produktionsmaßstab werden Plattenmodule oder Wickelelemente eingesetzt. Die Membranen weisen eine Trenngrenze zwischen 2.000 - 20.000 Dalton auf. Die Druckdifferenz beträgt 10 - 20 bar. Die Überströmgeschwindigkeit beträgt das 1,4 - 1,6-fache der vom Hersteller angegebenen minimalen Überströmgeschwindigkeit. Die Prozeßtemperatur liegt bei 20 - 30°C.
   - Vorlegen von 10 - 30% des Vorproduktes in einem Arbeitstank und Starten der Ultrafiltration, wobei die restlichen 70 - 90% des Vorproduktes kontinuierlich in den Arbeitstank entsprechend dem Permeatfluß eingeleitet werden. Der Permeatfluß beträgt in der Anfangsphase 10 - 15 l/m² h und nimmt während des Prozesses auf 4-6 l/m² h ab.
   - Ggf. wiederholte Ultrafiltration des Retentats.
   - Beendigung der Ultrafiltration bei Erreichen einer Polyphenolkonzentration von 7 -15 %.
   - Pasteurisieren des Retentats bzw. des Endprodukts mit einer Haltezeit zwischen 15-60 sec bei 97°C.

Die nach dem erfindungsgemäßen Verfahren hergestellten Frucht- und Gemüsesaftkonzentrate zeichnen sich durch eine Anthocyankonzentration von 2,5 - 5 % aus, d. h. es liegt eine Anreicherung um den Faktor 2 - 5 vor. Der Anteil der Mono- und Disaccharide liegt bei < 5 %, was einer Verringerung um den Faktor 5 - 20 entspricht. Der Wassergehalt beträgt 5-70%, der damit gegenüber dem Rohprodukt um den Faktor 1,3 - 2,3 erhöht wurde. Weiterhin ergibt sich eine Erhöhung des Polyphenolgehaltes um den Faktor 1,5 - 3,0.

Die erfindungsgemäß hergestellten Frucht- und Gemüsesäfte sind daher durch ihre verbesserte Zusammensetzung in idealer Weise geeignet, z. B. als hochwertige Lebensmittelzusätze im Bereich "health food / functional food " verwendet zu werden.

Weitere vorteilhafte Ausgestaltungen sind in den Unteransprüchen gekennzeichnet.

Nachstehend wird die Erfindung anhand von Beispielen näher erläutert.

### 1. Herstellung des Vorproduktes

Es wird als Edukt ein Fruftsaftkonzentrat (z.B. aus Aroniabeeren oder Schwarzen Johannisbeeren) mit 65 Brix, einem Wassergehalt (K.F.) von 30 - 40 %, einem Farbstoffgehalt (Anthocyane) von 0,8 1,0%, einem Polyphenolgehalt von 50-55g/l verwendet.

Das Fruchtsaftkonzentrat wird 1:4 mit Wasser verdünnt und anschließend enzymatisch mit einem Enzymprodukt (Hauptaktivität: Pektinasen / Nebenaktivität: Cellulasen, Hemicellulasen) sowie einem weiteren Enzymprodukt (Hauptaktivität: Pektinasen, Nebenaktivität: Proteasen) behandelt, wobei die Zusammensetzung des mit Enzymen versetzten Fruchtsaftkonzentrates sich wie folgt darstellt:

| | |
|---|---|
| 20,00 % | Fruchtsaftkonzentrat |
| 79,92 % | Wasser |
| 0,08 % | Enzymmixtur. |

Es werden für die Behandlung 10% wässrige Verdünnungen der Enzympräparate hergestellt. Das Konzentrat wird in Wasser verrührt und auf 40°C erwärmt. Danach werden langsam die Enzymlösungen zugesetzt und die Mischung 1 h bei 40°C gerührt und anschließend auf 20°C abgekühlt.

Zur Sedimentation der Trubstoffe wird das Vorprodukt über Nacht stehen gelassen. Am nächsten Tag erfolgt eine Beutelfiltration (Porengröße: 0,5 my) zur Abtrennung der Trubstoffe.

Das klare Vorprodukt wird anschließend pasteurisiert, wobei die Haltezeit 15 sec bei 97°C beträgt.

### 2. Ultrafiltration des Vorproduktes

Es wird eine asymmetrische Polyethersulfonmembran in der Konfiguration 6,2" x 38" Wickelelement verwendet. Es werden zwei parallel geschaltete 6,2" Druckrohre mit je drei seriell geschalteten Spiralen benutzt. Die Anordnung ist vertikal. Die Membranfläche pro Element beträgt 14,4 m², so daß sich eine Gesamtmembranfläche von 86,4 m² ergibt. Die Prozeßparameter sind wie folgt:

| | |
|---|---|
| Druck | 11 bar |
| Temperatur | < 25°C |
| Überströmgeschwindigkeit | 20 m³/h |
| Zuspeisung von Feed | kontinuierlich (Leistung der Doppelmembranpumpe: 1 m³/h) |
| Permeatfluß Anfangsphase | 1,0 m³/h |
| Endphase | 0,3 m³/h |

Das erhaltene Vorprodukt gemäß 1. wird der Ultrafiltration unterzogen, die bei Erreichen einer Anthocyankonzentration 3 - 4 % beendet wird. Anschließend wird das Retentat pasteurisiert bei einer Haltezeit von 45 sec bei 97°C. Das pasteurisierte Produkt stellt das Endprodukt dar.

### Eigenschaften des Endproduktes

| | |
|---|---|
| Anthocyankonzentration | 3 - 4 % |
| Red. Zucker | < 5 % |
| Wassergehalt | 60 - 65 % |
| Polyphenolgehalt | 9 - 10% |

## Patentansprüche

1. Verfahren zur Herstellung von Frucht- und Gemüsekonzentraten mit einer Anreicherung von Flavonoiden und/oder Anthocyaniden und verminderten Zucker- und Säuregehalt, unter Verwendung einer Ultrafiltration,
**dadurch gekennzeichnet,**
**dass** zur Herstellung eines Vorproduktes ein flavonoid- und/oder anthocyanidhaltiger Frucht- und Gemüsesaft oder ein entsprechendes Konzentrat, das mit Wasser im Verhältnis 1:2 bis 1:9 verdünnt wird, mit einer Mischung aus Pektinasen und Cellulasen, Hemicellulasen und/oder Proteasen enzymatisch über einen Zeitraum von einer Stunde und bei 40° bis 55° C behandelt wird, wobei die entstehenden Trubstoffe nach Sedimentation abfiltriert werden, und dass das erhaltene Vorprodukt zur Erlangung des Frucht- oder Gemüsekonzentrates mindestens einer Ultrafiltration unterzogen wird, wobei die Trenngrenze des Filters zwischen 2.000 und 20.000 Dalton liegt.

2. Verfahren nach Anspruch 1,
**dadurch gekennzeichnet,**
**dass** nach der Enzymbehandlung das Vorprodukt auf Raumtemperatur abgekühlt wird.

3. Verfahren nach einem der Ansprüche 1 und 2,
**dadurch gekennzeichnet,**
**dass** die Filtration der Trubstoffe mit einem herkömmlichen Filter, dessen Trenngrenze bei 0,2 - 3 µ liegt, durchgeführt wird.

4. Verfahren nach einem der Ansprüche 1 bis 3,
**dadurch gekennzeichnet,**
**dass** das Endprodukt, d. h. das Frucht- oder Gemüsekonzentrat und ggf. das Vorprodukt pasteurisiert werden.

5. Verfahren nach einem der Ansprüche 1 bis 4,
**dadurch gekennzeichnet,**
**dass** für die Ultrafiltration eine asymmetrischen polymere Ultrafiltrationsmembran verwendet wird.

6. Verfahren nach Anspruch 5,
**dadurch gekennzeichnet,**
**dass** als asymmetrischen polymere Ultrafiltrationsmembran Polysulfonmembranen, Polyethersulfonmembranen und deren hydrophile Varianten, Polyaramidmembranen und deren hydrophile Varianten verwendet werden.

7. Verfahren nach einem der Ansprüche 1 bis 6,
**dadurch gekennzeichnet,**
**dass** das Membranverfahren zur Ultrafiltration druckbetrieben ist.

8. Verfahren nach einem der Ansprüche 1 bis 7,
**dadurch gekennzeichnet,**
**dass** die Prozesstemperatur der Ultrafiltration bei 20 bis 30° C liegt.

9. Verfahren nach einem der Ansprüche 1 bis 8,
**dadurch gekennzeichnet,**
**dass** die Ultrafiltration mehrfach durchgeführt wird.

10. Verfahren nach einem der Ansprüche 1 bis 9,
**dadurch gekennzeichnet,**
**dass** die Beendigung der Ultrafiltration bei Erreichen einer Polyphenolkonzentration von 7 - 15 % erfolgt.

11. Frucht- oder Gemüsekonzentrat,
**dadurch gekennzeichnet,**
**dass** das Frucht- oder Gemüsekonzentrat einen Polyphenolgehalt von 70 -150 g/l, eine Anthocyankonzentration von 2,5 - 5 %, einen Anteil von Mono- und Disaccariden < 5 % und einen Wassergehalt von 50 - 70 % aufweist.

12. Verwendung der Frucht- und Gemüsekonzentrate mit einer Anreicherung von Flavonoiden und/oder Anthocyaniden und verminderten Zucker- und Säuregehalt, die dadurch hergestellt sind dass zur Herstellung eines Vorproduktes ein flavonoid- und/oder anthocyanidhaltiger Frucht- und Gemüsesaft oder ein entsprechendes Konzentrat, das mit Wasser im Verhältnis 1:2 bis 1:9 verdünnt wird, mit einer Mischung aus Pektinasen und Cellulasen, Hemicellulasen und/oder Proteasen enzymatisch über einen Zeitraum von einer Stunde und bei 40° bis 55° C behandelt wird, wobei die entstehenden Trubstoffe nach Sedimentation abfiltriert werden, und dass das erhaltene Vorprodukt zur Erlangung des Frucht- oder Gemüsekonzentrates mindestens einer Ultrafiltration unterzogen wird, wobei die Trenngrenze des Filters zwischen 2.000 und 20.000 Dalton liegt, als Lebensmittelzusatz.

## Claims

1. A process of manufacturing fruit and vegetable concentrates with an enrichment of flavonoids and/or anthocyanids and reduced sugar and acid content by using an ultrafiltration,
**characterized in**
**that**, for manufacturing a preliminary product, a flavonoids or anthocyanids containing fruit or vegetable juice or a corresponding concentrate which is diluted with water in the ratio 1:2 to 1:9 is enzymatically treated with a mixture of pectinases and cellulases, hemicellulases and/or proteases over a period of one hour and at 40° to 55° C, whereby the turbid substances are filtered out after sedimentation, and that the preliminary product obtained is submitted to at least one ultrafiltration for obtaining the fruit or vegetable concentrate, whereby the filter separating point lies between 2000 and 20000 Dalton.

2. A process according to claim 1,
**characterized in**
**that** the preliminary product is cooled down to ambient temperature after the enzym treatment.

3. A process according to any of the claims 1 and 2,
**characterized in**
**that** the filtration of the turbid substances is carried out with a traditional filter, the separating point of which lies by 0,2 - 3 µ.

4. A process according to any of the claims 1 to 3,
**characterized in**
**that** the end product, i.e. the fruit or vegetable concentrate, and eventually the preliminary product, are pasteurized.

5. A process according to any of the claims 1 to 4,
**characterized in**
**that** an asymetric polymeric ultrafiltration membrane is used for the ultrafiltration.

6. A method according to claim 5,
**characterized in**
**that** polysulfone membranes, polyethersulfone membranes and their hydrophile variants, polyaramide membranes and their hydrophile variants are used as asymetric polymeric ultrafiltration membranes.

7. A method according to any of the claims 1 to 6,
**characterized in**
**that** the membrane process for the ultrafiltration is carried out under pressure.

8. A method according to any of the claims 1 to 7,
**characterized in**
**that** the process temperature of the ultrafiltration lies at 20° to 30° C.

9. A method according to any of the claims 1 to 8,
**characterized in**
**that** the ultrafiltration is carried out several times.

10. A method according to any of the claims 1 to 9,
**characterized in**
**that** the ending of the ultrafiltration takes place when a polyphenol concentration of 7 to 15 % is reached.

11. A fruit or vegetable concentrate,
**characterized in**
**that** the fruit or vegetable concentrate has a polyphenol content of 70 to 150 g/l, an anthocyanin concentration of 2,5 to 5 %, a percentage of monosaccharides and disaccharides < 5 % and a water content of 50 to 70 %.

12. Use of the fruit and vegetable concentrates with an enrichment of flavonoids and/or anthocyanids and reduced sugar and acid content which are produced by the fact that, for manufacturing a preliminary product, a flavonoids or anthocyanids containing fruit or vegetable juice or a corresponding concentrate, which is diluted with water in the ratio 1:2 to 1:9, is enzymatically treated with a mixture of pectinases and cellulases, hemicellulases and/or proteases over a period of one hour and at 40° to 55° C, whereby the turbid substances are filtered out after sedimentation, and that the preliminary product obtained is exposed to at least one ultrafiltration for obtaining the fruit or vegetable concentrate, whereby the filter separating point lies between 2000 and 20000 Dalton, as a food additive.

## Revendications

1. Procédé pour la fabrication de concentrés de fruits et de légumes avec un enrichissement de flavonoïdes et/ou d'anthocyanides et une teneur en sucre et en acide réduite en utilisant une ultrafiltration,
**caractérisé en ce**
**que**, pour la fabrication d'un produit primaire un jus de fruits et de légumes contenant des flavonoïdes et/ou des anthocyanides ou un concentré correspondant, qui est dilué avec de l'eau dans le rapport 1:2 à 1:9, est traité avec un mélange de pectinases et de cellulases, d'hémicellulases et/ou de protéases par un procédé enzymatique pendant une période d'une heure et à 40° jusqu'à 55° C, les matières troubles qui se forment étant filtrées après sédimentation, et que le produit primaire obtenu est soumis, pour obtenir le concentré de fruits ou de légumes, à au moins une ultrafiltration, le seuil de séparation du filtre se situant entre 2000 et 20000 Dalton.

2. Procédé selon la revendication 1,
**caractérisé en ce**
**que** le produit primaire est refroidi à la température ambiante après le traitement aux enzymes.

3. Procédé selon l'une des revendications 1 et 2,
**caractérisé en ce**
**que** la filtration des matières troubles est effectuée avec un filtre traditionnel dont le seuil de séparation est à 0,2 - 3 p.

4. Procédé selon l'une des revendications 1 à 3,
**caractérisé en ce**
**que** le produit final, c'est-à-dire le concentré de fruits ou de légumes, et éventuellement le produit primaire sont pasteurisés.

5. Procédé selon l'une des revendications 1 à 4,
**caractérisé en ce**
**qu'**une membrane d'ultrafiltration polymère asymétrique est utilisée pour l'ultrafiltration.

6. Procédé selon la revendication 5,
**caractérisé en ce**
**que** des membranes de polysulfone, de polyéthersulfone et leurs variantes hydrophiles, des membranes de polyaramide et leurs variantes hydrophiles sont utilisées comme membranes d'ultrafiltration polymères asymétriques.

7. Procédé selon l'une des revendications 1 à 6,
**caractérisé en ce**
**que** le procédé de membrane pour l'ultrafiltration est effectué sous pression.

8. Procédé selon l'une des revendications 1 à 7,
**caractérisé en ce**
**que** la température du processus de l'ultrafiltration est de 20° à 30° C.

9. Procédé selon l'une des revendications 1 à 8,
**caractérisé en ce**
**que** l'ultrafiltration est réalisée plusieurs fois.

10. Procédé selon l'une des revendications 1 à 9,
**caractérisé en ce**
**que** la fin de l'ultrafiltration se fait lorsqu'une concentration de polyphénols de 7 à 15 % est atteinte.

11. Concentré de fruits ou de légumes,
**caractérisé en ce**
**que** le concentré de fruits ou de légumes présente une teneur en polyphénols de 70 à 150 g/l, une concentration d'anthocyanine de 2,5 à 5 %, un pourcentage de monosaccharides et de disaccharides < 5 % et une teneur en eau de 50 à 70 %.

12. Utilisation de concentrés de fruits et de légumes avec un enrichissement de flavonoïdes et/ou d'anthocyanides et une teneur en sucre et en acide réduite qui sont fabriqués par le fait que, pour la fabrication d'un produit primaire, un jus de fruits et de légumes contenant des flavonoïdes et/ou des anthocyanides ou un concentré correspondant, qui est dilué avec de l'eau dans le rapport 1:2 à 1:9, est traité avec un mélange de pectinases et de cellulases, d'hémicellulases et/ou de protéases par un procédé enzymatique pendant une période d'une heure et de 40° jusqu'à 55° C, les matières troubles qui se forment étant filtrées après sédimentation, et que le produit primaire obtenu est soumis, pour obtenir le concentré de fruits ou de légumes, à au moins une ultrafiltration, le seuil de séparation du filtre se situant entre 2000 et 20000 Dalton, comme additif alimentaire.
